# FASCICULE DE BREVET EUROPEEN

(11) **EP 0 976 240 B1**
(45) Date de publication et mention de la délivrance du brevet: **13.12.2006**
(21) Numéro de dépôt: 99902641.2
(22) Date de dépôt: 11.02.1999
(51) Int. Cl.: H04N 1/00, H04L 12/58

(54) **TELECOPIEUR POUR UN RESEAU INFORMATIQUE TEL QUE L'INTERNET**
FAKSIMILEGERÄT FÜR EIN INFORMATIONSNETZ WIE DAS INTERNET
FAX MACHINE FOR A DATA COMMUNICATION NETWORK SUCH AS INTERNET

(30) Priorité: 13.02.1998 FR 9801747
(43) Date de publication de la demande: 02.02.2000
(73) Titulaire: SAGEM Communication, 75015 Paris (FR)
(72) Inventeur: CAZIN, Dominique, F-92150 Suresnes (FR)
(74) Mandataire: Bloch, Gérard
(86) Numéro de dépôt international: PCT/FR1999/000305
(87) Numéro de publication internationale: WO 1999/041879

(56) Documents cités:
- WO-A-97/18665
- WO-A-97/41520
- US-A- 5 521 719

## Description

L'invention concerne les télécopieurs et plus particulièrement les télécopieurs agencés pour communiquer avec des télécopieurs correspondants à travers un réseau informatique tel que l'Internet.

Sur l'Internet, les communications entre télécopieurs, ayant chacun une adresse électronique, s'effectuent généralement par courriers électroniques, ces derniers contenant un en-tête et une télécopie. L'en-tête du courrier comprend notamment un champ de destination contenant l'adresse électronique de destination du courrier, et un champ de provenance contenant l'adresse de provenance du courrier.

La présente invention vise à faciliter la correspondance entre les télécopieurs de l'Internet, et de façon plus générale entre les télécopieurs d'un réseau informatique.

A cet effet, l'invention concerne un télécopieur agencé pour être relié à un réseau téléphonique et pour communiquer avec des télécopieurs correspondants à travers un réseau informatique de type Internet, les télécopieurs ayant chacun une adresse électronique sur ledit réseau informatique, caractérisé par le fait qu'il comprend des moyens mémoires pour stocker un historique des communications du télécopieur avec des télécopieurs correspondants, contenant les adresses électroniques desdits télécopieurs correspondants, des moyens pour gérer l'historique, en extraire les adresses électroniques et les associer aux télécopieurs correspondants et des moyens pour demander à un télécopieur correspondant son adresse électronique, lors d'une communication avec ledit télécopieur correspondant à travers le réseau téléphonique, lesdits moyens pour gérer l'historique étant agencés pour enregistrer ladite adresse électronique du télécopieur correspondant dans l'historique.

Grâce à cela, pour, par exemple, envoyer une télécopie à un télécopieur dont l'adresse est contenue dans l'historique, il suffit d'extraire cette adresse de l'historique et d'adresser la télécopie à cette adresse, en associant ainsi l'adresse à ce télécopieur correspondant.

Avantageusement, des moyens étant prévus pour recevoir une télécopie transmise depuis un télécopieur correspondant à travers ledit réseau informatique et associée à l'adresse électronique sur le réseau informatique dudit télécopieur correspondant, les moyens pour gérer l'historique sont agencés, à la réception de la télécopie, pour enregistrer l'adresse électronique dudit télécopieur correspondant dans l'historique.

Avantageusement encore, des moyens étant prévus pour émettre vers un télécopieur correspondant, à travers le réseau informatique, une télécopie associée à l'adresse électronique sur le réseau informatique du télécopieur correspondant, les moyens pour gérer l'historique sont agencés pour, avant l'émission de la télécopie, enregistrer l'adresse électronique dudit télécopieur correspondant dans l'historique.

L'invention sera mieux comprise à l'aide de la description suivante d'une forme de réalisation particulière du télécopieur de l'invention en référence au dessin annexé sur lequel:

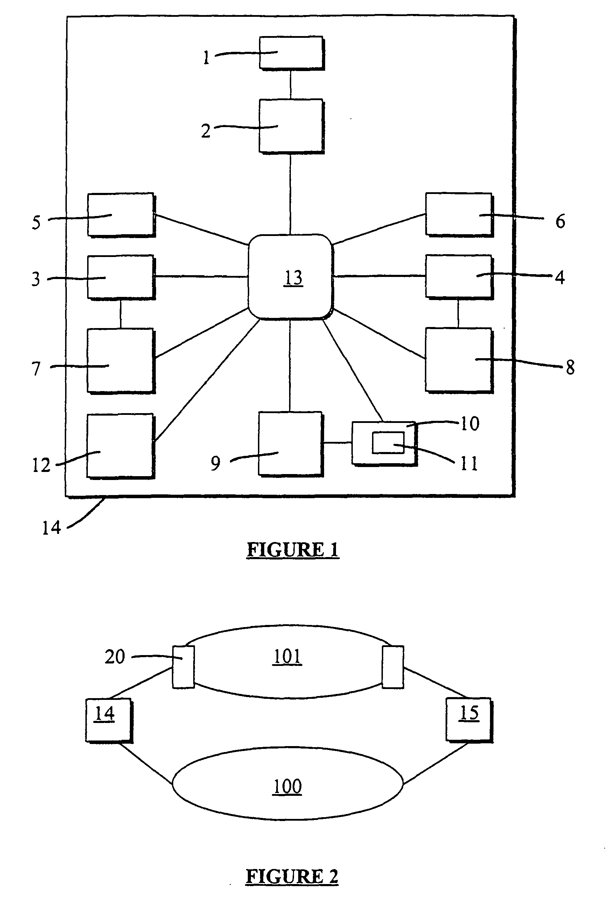

- la figure 1 représente un schéma bloc fonctionnel du télécopieur de l'invention et
- la figure 2 représente un schéma des réseaux auxquels est relié le télécopieur de la figure 1.

Le télécopieur de l'invention 14 est capable de communiquer avec des télécopieurs correspondants tels que le télécopieur 15 représenté sur la figure 2, à travers un réseau téléphonique, en l'espèce le réseau téléphonique commuté RTC 100, ainsi qu'à travers le réseau informatique de l'Internet 101. Il a donc des capacités à communiquer sur l'Internet et dispose d'une adresse Internet.

Par les termes "adresse Internet", on entend désigner une adresse électronique sur le réseau de l'Internet et, par définition, on appelle "télécopieur de l'Internet" un télécopieur ayant des capacités à communiquer à travers l'Internet et disposant d'une adresse Internet.

Le télécopieur 14 comprend, de façon classique, un modem 1 de liaison au réseau RTC 100, un bloc 2 d'émission et de réception, une mémoire d'émission 3, une mémoire de réception 4, un bloc 7 de préparation de télécopies, un bloc 8 de restitution de télécopies et un bloc d'interface homme-machine 12. Le bloc 2 est relié au modem 1, le bloc 7 à la mémoire d'émission 3 et le bloc 8 à la mémoire de réception 4.

Le bloc 2 d'émission et de réception est prévu pour émettre et recevoir des télécopies, soit par l'Internet 101, soit par le réseau RTC 100. Pour l'émission et la réception d'une télécopie par l'Internet 101, le bloc 2 est agencé pour se connecter à l'Internet 101 ici en exécutant un protocole de connexion téléphonique auprès d'un fournisseur 20 d'accès à l'Internet 101, avant l'envoi ou la réception de la télécopie. Pour l'émission et la réception d'une télécopie par le réseau RTC 100, le bloc 2 est agencé pour, de façon classique, exécuter un protocole d'échange de capacités avec le télécopieur correspondant 15 avant la transmission de la télécopie, suivant le protocole de télécopie T30.

La mémoire d'émission 3 et la mémoire de réception 4 sont respectivement destinées à contenir des télécopies à émettre et des télécopies reçues.

Le bloc d'interface homme-machine 12 comprend un clavier de saisie, un écran de visualisation et un logiciel d'interface homme-machine destiné à afficher sur l'écran une interface graphique comportant des menus contextuels d'utilisation du télécopieur 14.

Le bloc 7 de préparation de télécopies comporte un analyseur d'image, une application de traitement de texte et une application de préparation de courriers électroniques.

On rappelle ici que les courriers électroniques transmis sur l'Internet 101 comprennent un en-tête et éventuellement une télécopie. L'en-tête comporte plusieurs champs d'informations et, notamment, un champ de destination contenant l'adresse Internet de destination du courrier et un champ de provenance contenant l'adresse Internet d'émission du courrier. Dans le cas d'un courrier électronique contenant une télécopie, la télécopie est ainsi associée aux informations contenues dans les champs d'en-tête du courrier, et notamment à l'adresse Internet de destination.

Le bloc 8 comporte une imprimante et une application de visualisation des télécopies reçues à l'écran.

Un encodeur 5 et un décodeur 6 sont prévus pour respectivement encoder les télécopies à émettre par l'Internet 101 et décoder les télécopies reçues par l'Internet 101, suivant le protocole standard MIME de communication sur l'Internet 101.

Le télécopieur 14 comprend également une mémoire 10 de stockage d'un historique 11 des communications du télécopieur 14 avec des télécopieurs correspondants. La mémoire 10 est reliée à un bloc 9 de gestion de l'historique 11.

Enfin, il est prévu un bloc 13 de contrôle du télécopieur 14, en l'espèce un microprocesseur, auquel sont reliés tous les éléments du télécopieur 14.

L'historique des communications 11 et la gestion de cet historique par le bloc 9 vont maintenant être plus précisément décrits.

L'historique 11 est constitué d'une file d'éléments, chacun associés à un télécopieur correspondant et contenant les champs suivants:
- un champ "adresse Internet" destiné à contenir l'adresse Internet du télécopieur correspondant,
- un champ "nom" destiné à contenir des données d'identification du télécopieur correspondant, explicitées plus loin, et
- un champ "numéro d'appel téléphonique" destiné à éventuellement contenir un numéro d'appel téléphonique sur le réseau téléphonique RTC 100, ou sur un autre réseau téléphonique tel que le réseau numérique à intégration de services RNIS, du télécopieur correspondant.

Une adresse Internet de télécopieur comprend un nom suivi du signe @ (signifiant "à") puis de l'adresse d'un serveur et a donc la forme < nom > @ < adresse de serveur >. Le nom identifie le télécopieur auprès d'un serveur, qui appartient généralement à un fournisseur d'accès à l'Internet du télécopieur. Par les termes "données d'identification", on entend donc désigner le nom qui précède le signe @ dans une adresse Internet.

La file de l'historique 11 est circulaire et ses éléments sont classés de façon chronologique par le bloc de gestion 9. Les éléments les plus anciens et les éléments les plus récents de la file 11 sont respectivement placés en queue et en tête de file. En outre, la mémoire 10 ayant une capacité de stockage limitée, le nombre d'éléments de la file est par conséquent également limité de sorte que, quand la mémoire 10 est pleine, c'est-à-dire quand le nombre d'éléments de la file 11 contenant une adresse Internet est maximum, le bloc de gestion 9, à l'entrée de chaque nouvel élément dans la file 11, écrase, remplace, l'élément le plus ancien de la file 11 par ce nouvel élément.

Différents cas d'entrée d'un nouvel élément dans la file 11 vont maintenant être explicités.

### Emission d'une télécopie par l'Internet vers un télécopieur correspondant

Afin d'émettre une télécopie vers un télécopieur correspondant, par exemple le télécopieur 15, à travers l'Internet 101, le bloc 7 de préparation de télécopie, sous la commande d'un opérateur, prépare la télécopie, ici par analyse d'une image de télécopie, et la joint, dans un courrier, à l'en-tête du courrier électronique contenant l'adresse électronique du télécopieur correspondant 15, dans le champ de destination. L'opérateur saisit ici manuellement, à l'aide du clavier et de l'interface graphique s'affichant à l'écran, l'adresse Internet du télécopieur correspondant 15 afin de remplir le champ de destination du courrier.

Avant l'émission de la télécopie-courrier (c'est-à-dire du courrier contenant la télécopie), le bloc de gestion 9 lit le contenu du champ de destination du courrier, enregistre, copie, l'adresse Internet du télécopieur correspondant 15, contenue dans ce champ, dans le champ "adresse Internet" d'un nouvel élément de la file de l'historique 11, extrait le nom du télécopieur correspondant 15 de cette adresse Internet et l'enregistre dans le champ "nom" du nouvel élément de la file 11.

### Réception d'une télécopie transmise par l'Internet depuis un télécopieur correspondant

A la réception d'une télécopie-courrier transmise à travers l'Internet 101 depuis un télécopieur correspondant, ici le télécopieur 15, le bloc de gestion 9 lit le contenu du champ de provenance de l'en-tête du courrier reçu et enregistre l'adresse contenue dans ce champ, autrement dit l'adresse Internet du télécopieur correspondant 15, dans le champ "adresse Internet" d'un nouvel élément de la file de l'historique 10, extrait le nom de l'adresse Internet du télécopieur correspondant 15 et l'enregistre dans le champ "nom" du nouvel élément de la file.

### Appel téléphonique à un télécopieur correspondant

Afin d'émettre une télécopie vers un télécopieur correspondant, ici le télécopieur 15, par le réseau RTC 100, l'opérateur saisit ici au clavier le numéro d'appel téléphonique du télécopieur correspondant 15, le bloc 2 appelle ce numéro, établit une communication téléphonique avec le télécopieur correspondant 15 et, avant de transmettre la télécopie suivant le protocole T30, exécute un protocole d'échange de capacités avec le télécopieur correspondant 15. Au cours de ce protocole d'échange de capacités, le télécopieur 14 demande au télécopieur appelé 15, par une trame du protocole T30, s'il a des capacités à communiquer sur l'Internet et, le cas échéant, son adresse l'Internet.

Dans le cas où le télécopieur correspondant 15 est un télécopieur de l'Internet, les deux télécopieurs s'informent mutuellement qu'ils sont capables de communiquer sur l'Internet et s'échangent leurs adresses Internet respectives dans des trames de protocole. Le bloc de gestion 9 enregistre le numéro d'appel téléphonique du télécopieur correspondant 15, préalablement saisi par l'opérateur, dans le champ "numéro d'appel téléphonique" d'un nouvel élément de la file 11, et l'adresse Internet du télécopieur correspondant 15, transmise et reçue, dans le champ "adresse Internet", puis extrait le nom de cette adresse Internet et l'enregistre dans le champ "nom" du nouvel élément de la file 11.

On pourrait également envisager que le télécopieur 14 appelle un télécopieur correspondant 15 par le réseau RTC 100 spécifiquement pour lui demander son adresse Internet, au cours d'un protocole d'échange de capacités.

### Appel téléphonique d'un télécopieur correspondant

Dans le cas où le télécopieur 14 est appelé sur le réseau RTC 100 par un télécopieur correspondant de l'Internet 101, ici le télécopieur 15, pour la transmission d'une télécopie à travers le réseau RTC 100, les deux télécopieurs exécutent, comme précédemment décrit, un protocole d'échange de capacités au cours duquel le télécopieur correspondant 15 transmet au télécopieur appelé 14 son adresse Internet.

Le bloc de gestion 9 du télécopieur 14 enregistre l'adresse Internet, transmise et reçue, du télécopieur correspondant 15, dans le champ "adresse Internet" d'un nouvel élément de la file 11, extrait le nom de cette adresse et l'enregistre dans le champ "nom" du nouvel élément. Le télécopieur 14 étant ici abonné à un service tel que le service CLASS de France Télécom, ce service lui fournit le numéro d'appel téléphonique du télécopieur appelant 15 et le bloc de gestion 9 enregistre ce numéro dans le champ "numéro d'appel téléphonique" d'un nouvel élément de la file de l'historique 11.

Au lieu d'être fourni par le service CLASS, le numéro d'appel téléphonique du télécopieur correspondant pourrait être transmis par une trame du protocole d'échange de télécopie, par exemple par une trame TSI du protocole T30.

Le télécopieur 15 pourrait également appeler le télécopieur 14 par le réseau RTC 100, spécifiquement pour qu'ils s'échangent mutuellement leurs adresses Internet.

Le bloc de gestion 9 permet à l'opérateur de consulter les éléments de la file 11, par visualisation de ceux-ci sur l'écran, d'en extraire l'adresse Internet d'un télécopieur correspondant afin notamment d'envoyer une télécopie à ce télécopieur correspondant, à travers l'Internet 101, en associant ainsi l'adresse Internet extraite à ce télécopieur correspondant. De même, l'opérateur peut extraire de la file un numéro d'appel téléphonique afin d'appeler un télécopieur correspondant par le réseau RTC 100, en associant ainsi l'adresse Internet à ce télécopieur correspondant.

Dans une variante plus perfectionnée du télécopieur, ne variant de la description qui précède que par ce qui va maintenant être décrit, pour chaque nouvelle adresse Internet de télécopieur correspondant, associée à une télécopie reçue ou à une télécopie à émettre par l'Internet 101, ou encore transmise par le réseau RTC 100 au cours d'un protocole d'échange de capacités avec un télécopieur correspondant, le bloc de gestion extrait le nom de la nouvelle adresse Internet et le compare aux noms contenus dans les champs "nom" de la file de l'historique.

Dans le cas où le nom extrait de l'adresse Internet n'est contenu dans aucun élément de la file, le bloc de gestion l'enregistre, avec l'adresse Internet, dans un nouvel élément de la file, comme précédemment explicité.

Dans le cas où le nom extrait de l'adresse Internet est déjà contenu dans un élément de la file préexistant et ainsi déjà associé à une adresse Internet dans l'historique, le bloc de gestion compare la nouvelle adresse Internet à celle de l'élément préexistant de la file. En cas d'identité, le bloc de gestion n'enregistre pas la nouvelle adresse Internet. En cas de non identité, le bloc de gestion, par affichage d'une requête à l'écran du télécopieur, demande à l'opérateur du télécopieur s'il souhaite remplacer l'adresse contenue dans l'élément préexistant de la file par la nouvelle adresse et, le cas échéant, remplace l'ancienne adresse Internet par la nouvelle.

Au lieu de saisir l'adresse Internet ou le numéro d'appel téléphonique du télécopieur correspondant à l'aide du clavier, il pourrait être prévu de lire ce numéro dans une mémoire de stockage d'un répertoire de correspondants contenant les identités de télécopieurs correspondants associées à leur numéro d'appel téléphonique et à leur adresse Internet. Dans ce cas, le télécopieur comprendrait une telle mémoire de stockage d'un répertoire de correspondants et un bloc de gestion de cette mémoire destiné à gérer les enregistrements, et la mise à jour du répertoire.

## Revendications

1. Télécopieur (14) agencé pour être relié à un réseau téléphonique (100) et pour communiquer avec des télécopieurs correspondants (15) à travers un réseau informatique de type Internet (101), les télécopieurs (14, 15) ayant chacun une adresse électronique sur ledit réseau informatique (101), **caractérisé par le fait qu'**il comprend des moyens mémoires (10) pour stocker un historique (11) des communications du télécopieur avec des télécopieurs correspondants, contenant les adresses électroniques desdits télécopieurs correspondants, des moyens (9) pour gérer l'historique (11), en extraire les adresses électroniques et les associer aux télécopieurs correspondants et des moyens pour demander à un télécopieur correspondant (15) son adresse électronique, lors d'une communication avec ledit télécopieur correspondant (15) à travers le réseau téléphonique (100), lesdits moyens pour gérer l'historique étant agencés pour enregistrer ladite adresse électronique du télécopieur correspondant (15) dans l'historique (11).

2. Télécopieur (14) selon la revendication 1, dans lequel, des moyens (1, 2) étant prévus pour recevoir une télécopie transmise depuis un télécopieur correspondant (15) à travers ledit réseau informatique (101) et associée à l'adresse électronique sur le réseau informatique dudit télécopieur correspondant (15), les moyens (9) pour gérer l'historique (11) sont agencés, à la réception de la télécopie, pour enregistrer l'adresse électronique dudit télécopieur correspondant (15) dans l'historique (11).

3. Télécopieur (14) selon l'une des revendications 1 et 2, dans lequel, des moyens (1, 2) étant prévus pour émettre vers un télécopieur correspondant (15), à travers le réseau informatique (101), une télécopie associée à l'adresse électronique sur le réseau informatique du télécopieur correspondant (15), les moyens (9) pour gérer l'historique (11) sont agencés pour, avant l'émission de la télécopie, enregistrer l'adresse électronique dudit télécopieur correspondant (15) dans l'historique (11).

4. Télécopieur (14) selon l'une des revendications 1 à 3, dans lequel, chaque adresse électronique contenant des données d'identification, les moyens (9) pour gérer l'historique (11) sont agencés pour extraire lesdites données d'identification de chaque adresse de télécopieur correspondant (15) et pour les associer à ladite adresse dans l'historique (11).

5. Télécopieur selon la revendication 4, dans lequel les moyens pour gérer l'historique sont agencés pour comparer les données d'identification extraites de chaque nouvelle adresse électronique de télécopieur correspondant aux données d'identification associées aux adresses électroniques stockées dans l'historique afin de vérifier si lesdites données d'identification sont déjà associées à une adresse électronique dans l'historique.

6. Télécopieur selon la revendication 5, dans lequel dans le cas où les données d'identification extraites de la nouvelle adresse électronique sont déjà associées à une adresse électronique dans l'historique, les moyens pour gérer l'historique sont agencés pour comparer l'adresse électronique contenue dans l'historique à la nouvelle adresse électronique et, en cas de non identité, pour remplacer celle-là par celle-ci dans l'historique.

7. Télécopieur selon l'une des revendications 1 à 6, dans lequel, les moyens mémoire (10) ayant une capacité de stockage limitée, quand lesdits moyens mémoires (10) sont pleins, les moyens (9) pour gérer l'historique (11) sont agencés pour effacer l'adresse électronique la plus ancienne dans les moyens mémoire (10) avant d'enregistrer une nouvelle adresse électronique.

## Claims

1. Facsimile machine (14) arranged so as to be connected to a telephone network (100) and to communicate with associated facsimile machines (15) through a computer network of the Internet type (101), the facsimile machines (14, 15) each having an electronic address on the said computer network (101), **characterised by** the fact that it comprises memory means (10) for storing a history (11) of the communications of the facsimile machine with associated facsimile machines, containing the electronic addresses of the said associated facsimile machines, means (9) for managing the history (11), extracting therefrom the electronic addresses and associating them with the associated facsimile machines and means for requesting from an associated facsimile machine (15) its electronic address, during a communication with the said associated facsimile machine (15) over the telephone network (100), the said means for managing the history being arranged so as to record the said electronic address of the associated facsimile machine (15) in the history (11).

2. Facsimile machine (14) according to claim 1, in which, means (1, 2) being provided for receiving a facsimile transmitted from an associated facsimile machine (15) over the said computer network (101) and associated with the electronic address on the computer network of the said associated facsimile machine (15), the means (9) for managing the history (11) are arranged, on receipt of the facsimile, so as to record the electronic address of the said associated facsimile machine (15) in the history (11).

3. Facsimile machine (14) according to one of claims 1 and 2, in which, means (1, 2) being provided for sending to an associated facsimile machine (15), over the computer network (101), a facsimile associated with the electronic address on the computer network of the associated facsimile machine (15), the means (9) for managing the history (11) are arranged so as, before the sending of the facsimile, to record the electronic address of the said associated facsimile machine (15) in the history (11).

4. Facsimile machine (14) according to one of claims 1 to 3, in which, each electronic address containing identification data, the means (9) for managing the history (11) are arranged so as to extract the said identification data of each address of an associated facsimile machine (15) and to associate them with the said address in the history (11).

5. Facsimile machine according to claim 4, in which the means for managing the history are arranged so as to compare the identification data extracted from each new electronic address of an associated facsimile machine with the identification data associated with the electronic addresses stored in the history in order to check whether the said identification data are already associated with an electronic address in the history.

6. Facsimile machine according to claim 5, in which the case where the identification data extracted from the new electronic address are already associated with an electronic address in the history, the means for managing the history are arranged to as to compare the electronic address contained in the history with the new electronic address and, in the case of non-identity, to replace it with the one in the history.

7. Facsimile machine according to one of claims 1 to 6, in which, the memory means (10) having a limited storage capacity, when the said memory means (10) are full, the means (9) for managing the history (11) are arranged to delete the oldest electronic address in the memory means (10) before recording a new electronic address.

## Patentansprüche

1. Faxgerät (14), das dafür ausgelegt ist, mit einem Fernsprechnetz (100) verbunden zu werden und über ein Informatiknetz vom Typ Internet (101) mit Korrespondentfaxgeräten (15) zu kommunizieren, wobei die Faxgeräte (14, 15) jeweils eine elektronische Adresse in diesem Informatiknetz (101) besitzen, **dadurch gekennzeichnet, dass** es Speichermittel (10), um eine Historik (11) der Kommunikationen des Faxgeräts mit Korrespondentfaxgeräten zu speichern, die die elektronischen Adressen der Korrespondentfaxgeräte enthält, Mittel (9), um die Historik (11) zu verwalten, aus ihr die elektronischen Adressen zu extrahieren und sie den Korrespondentfaxgeräten zuzuordnen, und Mittel umfasst, um bei einem Korrespondentfaxgerät (15) bei einer Kommunikation mit diesem Korrespondentfaxgerät(15) über das Fernsprechnetz (100) seine elektronische Adresse abzufragen, wobei diese Mittel zum Verwalten der Historik dafür ausgelegt sind, diese elektronische Adresse des Korrespondentfaxgeräts(15) in der Historik (11) zu registrieren.

2. Faxgerät (14) nach Anspruch 1, bei dem, wobei Mittel (1, 2) vorgesehen sind, um eine Fernkopie zu empfangen, die von einem Korrespondentfaxgerät (15) über das Informatiknetz (101) übertragen wird und der elektronischen Adresse des Korrespondentfaxgeräts (15) in dem Informatiknetz zugeordnet ist, die Mittel (9) zum Verwalten der Historik (11) dafür ausgelegt sind, bei dem Empfang der Fernkopie die elektronische Adresse des Korrespondentfaxgeräts (15) in der Historik (11) zu registrieren.

3. Faxgerät (14) nach einem der Ansprüche 1 und 2, bei dem, wobei Mittel (1, 2) vorgesehen sind, um zu einem Korrespondentfaxgerät(15) über das Informatiknetz (101) eine der elektronischen Adresse des Korrespondentfaxgeräts (15) in dem Informatiknetz zugeordnete Fernkopie zu senden, die Mittel (9) zum Verwalten der Historik (11) dafür ausgelegt sind, vor der Sendung der Fernkopie die elektronische Adresse dieses Korrespondentfaxgeräts (15) in der Historik (11) zu registrieren.

4. Faxgerät (14) nach einem der Ansprüche 1 bis 3, bei dem, wobei jede elektronische Adresse Identifizierungsdaten enthält, die Mittel (9) zum Verwalten der Historik (11) dafür ausgelegt sind, diese Identifizierungsdaten aus jeder Adresse eines Korrespondentfaxgeräts (15) zu extrahieren und sie dieser Adresse in der Historik (11) zuzuordnen.

5. Faxgerät nach Anspruch 4, bei dem die Mittel zum Verwalten der Historik dafür ausgelegt sind, die aus jeder neuen elektronischen Adresse eines Korrespondentfaxgeräts extrahierten Identifizierungsdaten mit den Identifizierungsdaten zu vergleichen, die den in der Historik gespeicherten elektronischen Adressen zugeordnet sind, um zu überprüfen, ob diese Identifizierungsdaten bereits einer elektronischen Adresse in der Historik zugeordnet sind.

6. Faxgerät nach Anspruch 5, bei dem in dem Fall, in dem die aus der neuen elektronischen Adresse extrahierten Identifizierungsdaten bereits einer elektronischen Adresse in der Historik zugeordnet sind, die Mittel zum Verwalten der Historik dafür ausgelegt sind, die in der Historik enthaltene elektronische Adresse mit der neuen elektronischen Adresse zu vergleichen und im Fall der Nichtidentität diese durch jene in der Historik zu ersetzen.

7. Faxgerät nach einem der Ansprüche 1 bis 6, bei dem, wobei die Speichermittel (10) eine begrenzte Speicherkapazität besitzen, wenn die Speichermittel (10) voll sind, die Mittel (9) zum Verwalten der Historik (11) dafür ausgelegt sind, die älteste elektronische Adresse in den Speichermitteln (10) zu löschen, bevor eine neue elektronische Adresse registriert wird.
